# EUROPÄISCHE PATENTANMELDUNG

(11) **EP 0 873 815 A2**
(43) Veröffentlichungstag der Anmeldung: **28.10.1998**
(21) Anmeldenummer: 98106827.3
(22) Anmeldetag: 15.04.1998
(51) Int. Cl.: B23Q 3/18, B23Q 3/06

(54) **Werkstückspannung über Einzugsnippel**

(30) Priorität: 22.04.1997 DE 19716800
(71) Anmelder: Stark, Emil, jr., A-6840 Götzis (AT)
(72) Erfinder: Stark, Emil, jr., A-6840 Götzis (AT)
(74) Vertreter: Riebling, Peter, Dr.-Ing.

(57) **Zusammenfassung**

Vorrichtung zur Befestigung eines Werkstückes (8) mittels eines Einzugsnippels (5) und eines Schnellspannzylinders (2), wobei die Einzugskraft des Schnellspannzylinders über den Einzugsnippel auf das Werkstück wirkt.

## Beschreibung

Gegenstand der vorliegenden Erfindung ist eine Vorrichtung nach dem Oberbegriff des Anspruchs 1.

Bei derartigen Vorrichtungen, die beim Anmelder erhältlich sind, wird ein Schnellspannzylinder verwendet, um einen Einzugsnippel einzuziehen. Nach den bisher bekannten Konstruktionen war dieser Einzugsnippel stets an einer Palette befestigt; um Werkstücke anzubringen, mußten diese gesondert auf der Palette angebracht werden.

Dies bedeutet, daß zwangsweise für das Anbringen von Werkstücken eine weitere, relativ aufwendige Befestigung dieser Werkstücke gegenüber der Palette erforderlich waren.

Darüber hinaus kann durch das System Schnellspannzylinder-Einzugsnippel eine nullpunkt-orientierte Befestigung der Palette erfolgen. Dies bedeutet, daß die Mittellinie des zur Befestigung dienenden Einzugsnippels als Referenzlinie dient und somit beim Anbringen der Palette kein aufwendiges Nachjustieren mehr erforderlich ist.

Die bekannten Systeme funktionieren ausgezeichnet, wenn es sich um eine Palette handelt, auf der mehrere Werkstücke angebracht sind. Es hat sich allerdings herausgestellt, daß für bestimmte Werkstücke das Befestigen auf einer Palette nicht zwingend erforderlich ist. Bisher ist es nicht möglich, auf dieses Befestigen an der Palette zu verzichten; die bekannten Systeme erfordern stets das Verwenden einer Palette mit den zugeordneten Spannmitteln für die Werkzeuge.

Aufgabe der vorliegenden Erfindung ist es daher, eine Befestigung bereitzustellen, bei der das Werkstück einfach und mit geringem Justieraufwand nullpunkt-orientiert befestigt werden kann.

Erfindungsgemäß wird diese Aufgabe durch die technische Lehre des Anspruches 1 gelöst.

Der wesentliche Grundgedanke ist, die durch das System Schnellspannzylinder-Einzugsnippel vorhandene Einzugskraft nicht nur zum Einziehen zu nutzen, sondern diese Kraft gleichzeitig auf das Werkstück weiterzuleiten und somit in einem einzigen Arbeitsgang zu spannen und das Werkstück zu befestigen.

Mit dieser Ausführungsart ergibt sich eine ganze Reihe von wesentlichen Vorteilen.

Zunächst kann vollständig auf eine Palette verzichtet werden; das Werkstück wird direkt eingezogen.

Weiter ist es nicht mehr erforderlich, die Werkstücke in einer genau ausgerichteten Lage auf der Palette zu befestigen. Die Ausrichtung der Werkstücke erfolgt vielmehr nun im wesentlichen selbsttätig, sobald die Einzugsnippel in die jeweiligen Schnellspannzylinder eingezogen werden. Je nach der Größe des Werkstücks kann hierbei für ein Werkstück nur ein Einzugsnippel verwendet werden; es ist aber ebenfalls möglich, mehrere Einzugsnippel an einem einzigen Werkstück zu befestigen.

Es ist hierbei drittens nicht erforderlich, die Einzugsnippel direkt in dem Werkstück anzubringen. Bei vielen Werkstücken ist es nämlich aus konstruktiven Gründen nicht möglich, die entsprechenden Ausnehmungen zur Befestigung der Einzugsnippel vorzusehen; bauartbedingt wird dies stets nur bei sehr großen Werkstücken der Fall sein. Kleinere Werkzeuge mußten demgegenüber bisher stets auf Paletten festgelegt und anschließend bearbeitet werden.

Je nach der Art und der Größe des Werkstücks und der vorgesehenen Bearbeitung kann dieses sich entweder direkt auf dem Schnellspannzylinder bzw. dessen Deckel anlegen oder aber eine Aufnahme zwischen Werkstück und Schnellspannzylinder eingelegt werden. Diese Ausnahme dient mehreren Zwecken.

Der erste ist, eine relativ großflächige Abstützung für das Werkstück zu schaffen, um zu verhindern, daß es sich während der Bearbeitung verformt.

Zweitens dient die Aufspannpalette dazu, bei der Bearbeitung des Werkstücks einen Sicherheitsabstand zwischen dem Schnellspannzylinder und dem Werkstück zu schaffen. Bei einem genauen Aufliegen des Werkstücks auf dem Schnellspannzylinder ist es nämlich nicht möglich, das Werkstück über seine gesamte Höhe zu bearbeiten, ohne den Schnellspannzylinder oder das Werkzeug zu beschädigen. Wird demgegenüber eine Aufspannpalette verwendet, die relativ weich ausgebildet sein kann, so kann ohne weiteres mit dem Werkzeug in diese Aufspannpalette hineingefahren werden.

Falls gewünscht kann darüber hinaus das Werkstück in einer bestimmten Winkelstellung fixiert werden. Dies wird insbesondere bei Werkstücken der Fall sein, die nicht rotationssymmetrisch bearbeitet werden. Ist eine derartige rotationssymmetrische Bearbeitung vorgesehen, kann diese Fixierung in der Winkelstellung auch entfallen. Dies bedeutet, daß das Werkstück in einer beliebigen Winkelstellung aufgesetzt und anschließend, nach dem Einziehen des Einzugsnippels in den Schnellspannzylinder, durch die Reibung zwischen den Berührstellen verdrehsicher gehalten ist.

Der Einzugsnippel wirkt hierbei, wie bereits weiter oben ausgeführt, nicht direkt auf das Werkstück, sondern ist mit einem Spannelement versehen. Dieses Spannelement weist eine oder mehrere Anlage- und/oder Zentrierflächen auf, die zur Befestigung und lagerichtigen Ausrichtung des Werkstückes dienen.

Je nach der vorgesehenen Bearbeitung des Werkstücks kann das Spannelement mit verschiedenen Ausnehmungen versehen sein. Falls z. B. vorgesehen ist, das Werkstück der Länge nach zu trennen, also praktisch zu halbieren, kann das Spannelement mit einer entsprechenden, durchgehenden Aussparung versehen sein. In diesem Fall ist es zweckmäßig, auch die Aufspannpalette mit einer entsprechenden, zugehörigen Ausnehmung zu versehen.

Unabhängig davon, ob derartige Ausnehmungen vorgesehen sind, kann zusätzlich eine Verdrehsicherung zwischen dem Spannelement und dem Schnellspannzylinder oder der Aufspannpalette vorgesehen sein. Dies bedeutet, daß das Spannelement nur in einer bestimmten Winkelstellung aufgesetzt und eingezogen werden kann. Es ist damit möglich, nicht nur das Werkstück, sondern auch das Spannelement sowie die Aufspannpalette in einer vorgegebenen Winkelstellung gegenüber dem Schnellspannzylinder anzuordnen.

In einer zweiten Ausgestaltung der vorliegenden Erfindung ist es vorgesehen, daß nicht nur mit einem einzigen Schnellspannzylinder und einem dazugehörenden Einzugsnippel gespannt wird, sondern daß mehr als ein Schnellspannzylinder mit zugehörendem Einzugsnippel auf das Spannelement wirken.

In diesem Ausführungsbeispiel ist beispielhaft angegeben, daß insgesamt zwei Schnellspannzylinder mit jeweils einem zugeordneten Einzugsnippel vorhanden sind, wobei der jeweilige Einzugsnippel in das zugeordnete Spannelement eingreift, beispielsweise in einer Gewindebohrung verankert ist. Auf diese Weise können damit auch große Flächen und entsprechend auch großbauende Spannelemente in hochgenauer Form gespannt werden, weil eben an dem Spannelement nicht nur ein einziger Schnellspannzylinder mit seinem Einzugsnippel ansetzt, sondern mehr als einer. Selbstverständlich ist die Erfindung nicht auf die Verwendung von zwei Schnellspannzylindern beschränkt, es können auch drei oder mehrere sein.

Die Art, Anzahl und Anordnung der Schnellspannzylinder, welche alle auf dasselbe Spannelement arbeiten, hängt von den Ausmaßen des Werkstückes und von der jeweiligen individuellen Spannaufgabe ab.

Nach dem Stand der Technik ist es nämlich bekannt, einen Schnellspannzylinder mit einem dazugehörenden Einzugsnippel zu verwenden, der allerdings nicht direkt in das Spannelement eingreift, sondern in eine Aufspannpalette eingreift, welche ihrerseits Anschläge für das zu bearbeitende Werkstück bildet.Bei diesem bekannten Stand der Technik wird also nicht das Werkstück gleichzeitig gespannt und gehalten. Dies hat den Nachteil, daß dem Spannelement ein Temperaturausgleich zugeordnet werden muß, um eine hochgenaue Bearbeitung zu gewährleisten. Zu diesem Zweck weist der Einzugsnippel die Form eines Schwertbolzens auf, der in eine zugeordnete Nut eingreift, so daß er temperaturbedingt dort verschiebbar ist. Will man nun mit dieser Aufspanntechnik ein größeres Werkstück aufspannen, dann würde man dieses Werkstück mit einer Anzahl von im Abstand voneinander angeodneten Schnellspannzylindern und zugehörenden Einzugsnippeln aufspannen, wobei jedem Einzugsnippel ein Temperaturausgleich zugeordnet ist. Dies führt zu einer unzulässigen Verformung des zu bearbeitenden Werkstückes, weil ja dann jedem Einzugsnippel ein gesonderter Temperaturausgleich zugeordnet wird.

Hier setzt die Erfindung ein. Sie zeigt, daß auch bei der Aufspannung größerer Werkstücke mit mehr als einem Schnellspannzylinder und einem zugeordneten Einzugsnippel es ausreicht, eine einzige, hochgenau definierte Anlagefläche (Nullpunkt-Orientierung) zu definieren, während alle anderen Anlageflächen verschiebbar sind und hierdurch der Temperaturausgleich automatisch gewährleistet wird. Auf diese Weise ist es erstmals möglich, mit mehr als einem Schnellspannzylinder und einem zugeordneten Spannelement große zu bearbeitende Werkstücke zu spannen. Von besonderem Vorteil ist hierbei, daß das Werkstück gleichzeitig gespannt und gehalten wird, wodurch dadurch gleichzeitig der Temperaturausgleich gewährleistet ist.

Es wird also lediglich einem einzigen Schnellspannzylinder der gesamten Aufspannanordnung die Nullpunkt-Orientierung zugeordnet, während alle anderen Schnellspannzylinder und die dazugehörenden Einzugsnippel ein frei bewegliches Spiel haben, d.h. sie spannen lediglich, sind aber in der horizontalen Ebene verschiebbar ausgebildet und können so den Temperaturausgleich leisten.

Eine temperaturbedingte Verformung des Werkstückes ist damit zugelassen, ohne daß sich das Werkstück während der Aufspannung unzulässig verformt.

Verwendet man also beispielsweise zwei Schnellspannzylinder mit zugeordnetem Einzugsnippel, dann wird dem einen Einzugsnippel die nullpunkt-orientierte Anlagefläche zugeordnet, während der andere Einzugsnippel mit Spiel in X- und Y-Richtung in das Spannelement eingreift und einen dementsprechenden Temperaturausgleich gewährleistet.

Der Erfindungsgegenstand der vorliegenden Erfindung ergibt sich nicht nur aus dem Gegenstand der einzelnen Patentansprüche, sondern auch aus der Kombination der einzelnen Patentansprüche untereinander.

Alle in den Unterlagen, einschließlich der Zusammenfassung, offenbarten Angaben und Merkmale, insbesondere die in den Zeichnungen dargestellte räumliche Ausbildung werden als erfindungswesentlich beansprucht, soweit sie einzeln oder in Kombination gegenüber dem Stand der Technik neu sind.

Im folgenden wird die Erfindung anhand von mehrere Ausführungswege darstellenden Zeichnungen näher erläutert. Hierbei gehen aus den Zeichnungen und ihrer Beschreibung weitere erfindungswesentliche Merkmale und Vorteile der Erfindung hervor.

Dabei zeigt:
- Figur 1:: ein Querschnitt durch eine erfindungsgemäße Vorrichtung;
- Figur 2:: eine Draufsicht auf einen Schnellspannzylinder;
- Figur 3:: eine Draufsicht auf eine Aufspannpalette;
- Figur 4:: einen Schnitt durch die Aufspannpalette;

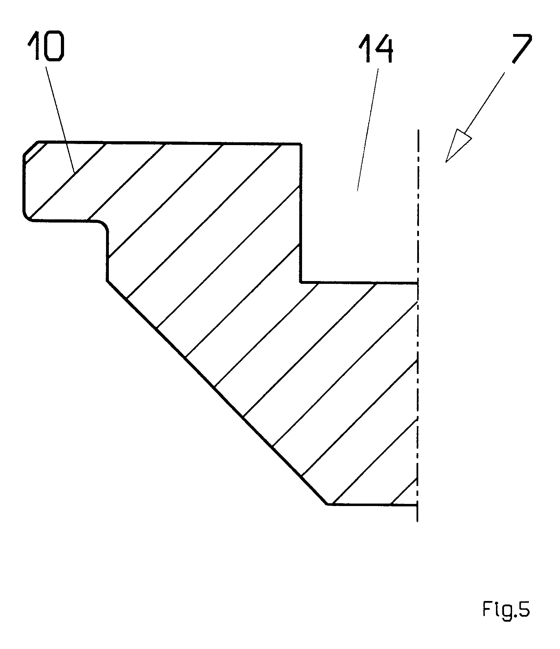

- Figur 5:: einen Teilschnitt durch ein Spannelement.
- Figur 6:: Einen Schnitt durch eine Aufspann-Situation für die Bearbeitung eines großflächigen Werkstückes (Fensterrahmen) für die erste Bearbeitung der Innenkontur;
- Figur 7:: die Draufsicht auf die Darstellung nach Figur 6;
- Figur 8:: die gleiche Darstellung wie Figur 7 in einem fortgeschrittenen Bearbeitungszustand, wobei das Werkstück bereits schon um 180° gedreht und mit dem Spannelement gespannt wird;
- Figur 9:: der Schnitt durch die Figur 8.

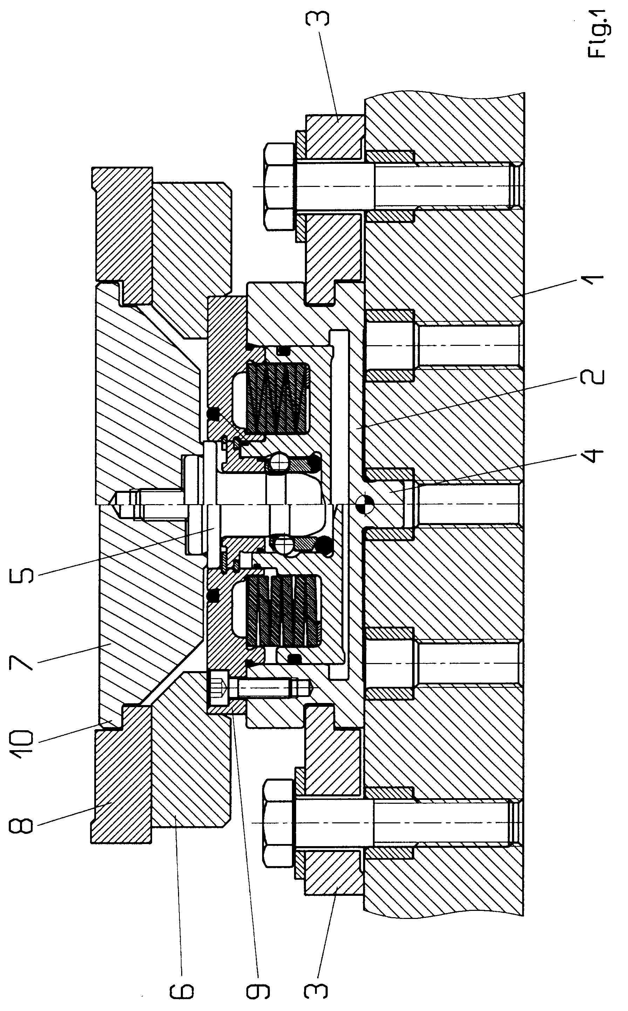

Figur 1 zeigt einen Querschnitt durch eine erfindungsgemäße Vorrichtung. Grundlage ist hierbei eine Lochrasterpalette 1, an der ein Schnellspannzylinder 2 über zwei Briden 3 befestigt ist. Die Briden ihrerseits sind über entsprechende Schrauben in den Paßbohrungen der Lochrasterpalette 1 verankert und sichern hierdurch den Schnellspannzylinder 2 gegen Abheben.

Das Ausrichten des Schnellspannzylinders an dem Nullpunkt-System erfolgt über einen Ansatz 4, der in eine der Bohrungen der Lochrasterpalette 1 eingreift. Dies bedeutet, daß die Mittelachse des Einzugsnippels 5 genau auf der Mittelachse der zugeordneten Bohrung liegt.

In der oberen Hälfte der Figur 1 ist links der eingezogene Zustand des Einzugsnippels 5 dargestellt, rechts der gelöste Zustand. Der Einzugsnippel wirkt hierbei auf ein Spannelement 7, das seinerseits auf ein Werkstück 8 wirkt. Zwischen dem Werkstück 8 und dem Deckel 9 des Schnellspannzylinders 2 ist in den gezeigten Ausführungsbeispielen eine Aufspannpalette 6 vorgesehen.

Zum Spannen des Werkstücks 8 wird zunächst der Einzugsnippel 5 zusammen mit dem Spannelement entfernt. Danach wird das Werkstück 8 auf die Aufspannpalette 6 aufgelegt und das Spannelement 7 zusammen mit dem Einzugsnippel 5 eingesetzt. Anschließend erfolgt ein Einziehen des Einzugsnippels 5, so daß das Spannelement 7 sich mit seinem Vorsprung 10 an einem zugeordneten Anschlag des Werkstückes 8 anlegt. Das Werkstück 8 wird hierdurch nach unten gegen die Aufspannpalette gepreßt und sicher gehalten.

Eine Zentrierung erfolgt hierbei entweder an den Umfangsflächen des Vorsprungs 10 oder an den weiter innenliegenden ebenfalls senkrecht verlaufenden Flächen. Es ist wesentlich, daß zwischen der Unterkante des Spannelements 7 sowie der Oberkante des Deckels 9 auch in eingezogenem Zustand noch ein gewisser Luftspalt verbleibt. Dieser Luftspalt stellt sicher, daß die gesamte auf den Einzugsnippel 5 wirkende Einzugskraft auch tatsächlich über das Spannelement 7 und den Vorsprung 10 zur Einspannung des Werkstückes 8 verwendet wird.

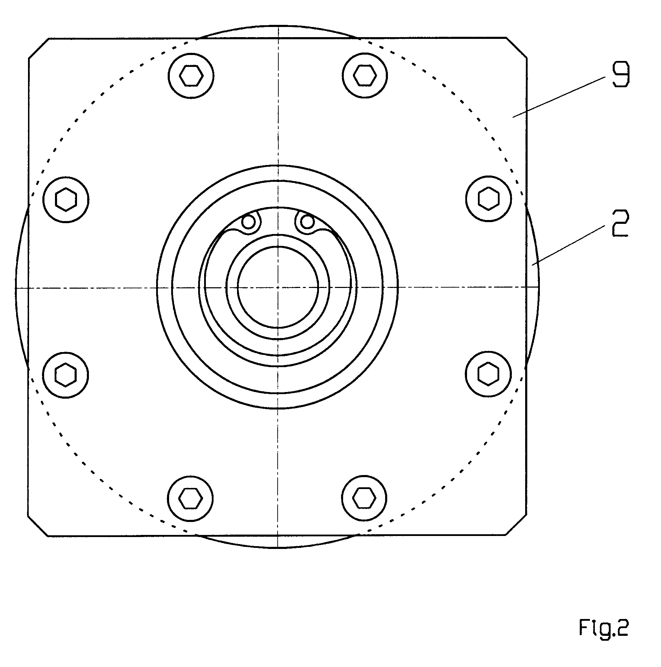

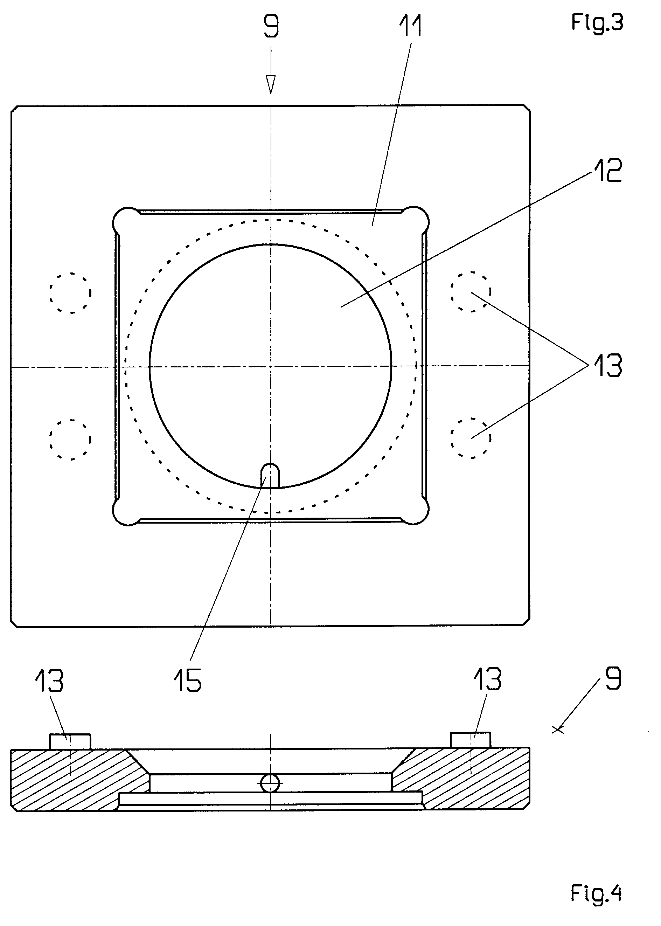

Die Aufspannpalette 6 kann hierbei so ausgebildet sein, daß sie verdrehsicher und damit auch lagerichtig gegenüber dem Schnellspannzylinder 2 aufgebracht werden kann. Entsprechende Ausführungen sind in den Figuren 2 und 3 enthalten.

Figur 2 zeigt eine Draufsicht auf einen Schnellspannzylinder 2 mit einem im wesentlichen quadratischen Deckel 9. Die Umfangsflächen dieses quadratischen Deckels 9 dienen als Anschlagflächen für die Aufspannpalette 6.

Es ist selbstverständlich ebenfalls möglich, das Werkstück 8 direkt auf diesem Deckel 9 aufzulegen; der Deckel 9 kann zu diesem Zweck etwas größer als in Figur 1 dargestellt ausgebildet sein.

Anstelle der in Figur 2 gezeigten etwa quadratischen Ausbildung kann der Deckel auch eine andere, polygonale Form oder eine Verzahnung oder ähnliches aufweisen.

In den Figuren 3 und 4 ist eine Aufspannpalette 6 gezeigt, die an ihrer Oberseite dargestellt mit einer Aussparung 11 versehen ist, die von der Form her etwa dem Deckel 9 gemäß Figur 2 entspricht. Die Aufspannpalette 6 kann somit in insgesamt vier Stellungen um jeweils 90° verdreht zueinander auf den Deckel 9 aufgesetzt und dort lagerichtig gehalten werden. Selbstverständlich kann hier auch eine andere Form gewählt werden, um eine geringere Teilung zu erreichen, so daß auch andere Winkelschritte möglich sind. Alternativ kann die Aufspannpalette 6 mit nach unten abragenden, nicht näher dargestellten Stiften versehen sein, die sich an den Seitenflächen des Deckels 9 anlegen.

Die Aufspannpalette 6 weist weiter in ihrer Mitte eine Öffnung 12 auf, die für das Durchtreten des Spannelementes 7 und des Einzugsnippels 5 bestimmt ist.

Um das Werkstück 8 gegenüber der Aufspannpalette 6 zu fixieren, sind Anschläge 13 vorgesehen, die im gezeigten Ausführungsbeispiel als abragende, im wesentlichen runde Stifte ausgebildet sind. Selbstverständlich können je nach der Form und Konstruktion des zu bearbeitenden Werkstückes 8 auch andere Anschläge vorgesehen sein. Diese Anschläge 13 stellen sicher, daß das Werkzeug in einer winklig genau ausgerichteten Lage gegenüber der Aufspannpalette 6 angebracht ist, die wiederum winklig gegenüber dem Schnellspannzylinder 2 aufliegt. Dies bedeutet, daß nicht nur die Lage der Mittellinie, sondern auch die Winkelstellung des Werkstücks 8 gegenüber der Maschinen, an der die Lochrasterpalette 1 befestigt wird, genau festgelegt sind. Ein aufwendiges Nachjustieren nach dem Befestigen der Werkstücke 8 kann somit vollständig entfallen.

In bestimmten Anwendungsfällen kann z. B. in Figur 1 eine Bearbeitung des Werkstücks 8 über seine gesamte Breite von links nach rechts vorgesehen sein. In diesem Fall ist es zweckmäßig, den Einzugsnippel 5 bzw. das zugehörige Spannelement 7 ebenfalls in einer vorgegebenen Winkelstellung einzubringen. Zu diesem Zweck ist in Figur 3 ein Stift 15 vorgesehen, der entweder an der Aufspannpalette 6 oder aber direkt an dem Schnellspannzylinder 2 bzw. dessen Deckel 9 angebracht sein kann. Dieser Stift 15 greift in eine nicht näher dargestellte Aussparung an dem Spannelement 7 ein und stellt somit sicher, daß es nur in einer einzigen, bestimmten Lage eingezogen werden kann.

Selbstverständlich ist es auch hier möglich, nicht nur einen, sondern mehrere Stifte bzw. zugeordnete Ausnehmungen vorzusehen, um auch bestimmte Winkelstellungen des Spannelementes 7 zuzulassen.

Diese lagerichtige Einsetzen des Spannelementes 7 ist insbesondere dann erforderlich, wenn es zur besseren Bearbeitung des Werkstückes 8 mit einer oder mehreren Aussparungen 14 versehen ist. Diese Aussparungen 14 müssen selbstverständlich von vorn herein so gelegt werden, daß sie mit der entsprechenden Ausrichtung des Werkstückes 8 übereinstimmen.

Falls allerdings das Werkstück 8 komplett rotationssymmetrisch ausgebildet ist, ist die genaue Lage der Aussparungen 14 nicht kritisch, so daß diese Fixierung ggf. auch entfallen kann.

Bei einer entsprechenden konstruktiven Auslegung der Werkstücke, der Aufspannpalette 6 sowie des Spannelementes 7 können nicht nur eines sondern ggf. auch mehrere Werkstücke 8 gleichzeitig gespannt werden. Hierbei ist allerdings zu beachten, daß außer der Betätigung des Schnellspannzylinders 2 zum Einziehen des Einzugsnippels 5 keine weiteren Maßnahmen zum festlegen der Werkstücke 8 erforderlich sind. Die Werkstücke 8 können hierbei beispielsweise gegen schräg gerichtete Kegelflächen gedrängt werden und auf diese Weise festgelegt werden. Alternativ dazu ist es selbstverständlich ebenfalls möglich, relativ groß bauende Werkstücke nicht nur über einen einzigen Schnellspannzylinder, sondern über mehrere und damit auch über mehrere Spannelemente 7 festzulegen. Dies bietet sich insbesondere dann an, wenn relativ große Werkstücke 8 verwendet werden, in denen aus konstruktiven Gründen keine Einzugsnipppel 5 direkt befestigt werden dürfen.

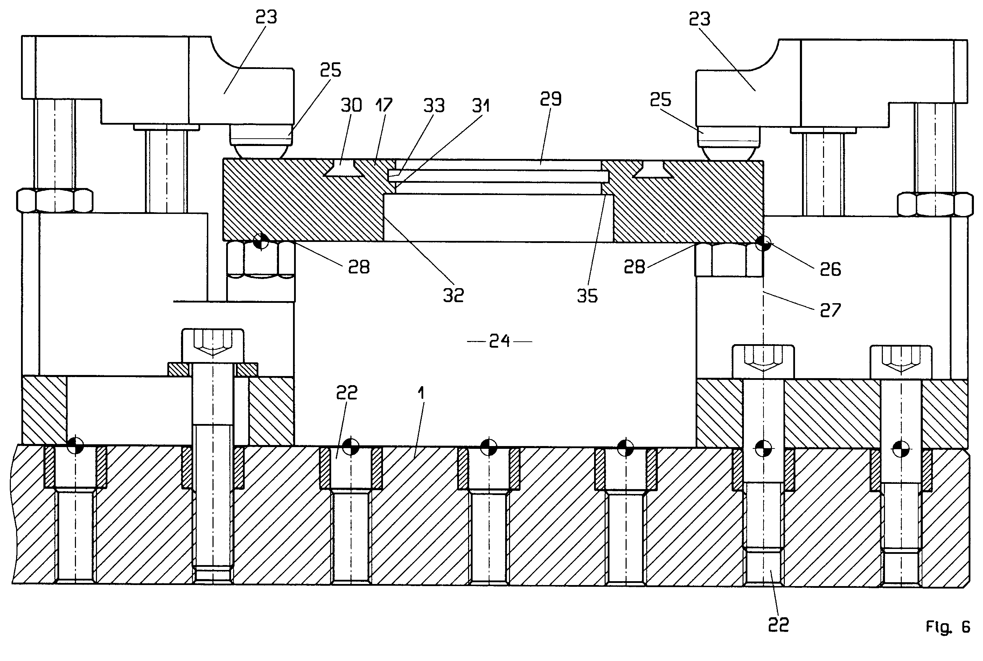

Figur 6 zeigt die Bearbeitung eines Werkstückes 17 in einem ersten Bearbeitungsschritt, wobei erkennbar ist, daß eine Anzahl von Flachspannern 23 mit zugeordneten Befestigungsschrauben in den Passbohrungen 22 der Lochrasterpalette 1 eingeschraubt sind und dort befestigt sind.

Der Fensterrahmen ist z.B. ein Aluminiumteil und wird im gezeigten Ausführungsbeispiel nach Figur 6 von der Rückseite her bearbeitet. Hierbei ist erkennbar, daß die Flachspanner 23 mit zugeordneten Spannpratzen 25 auf der Rückseite dieses Werkstückes 17 aufsetzen und daß die gegenüberliegende Seite auf Aufspannpaletteflächen 28 aufliegt, wobei - wichtig im Sinne der vorliegenden Erfindung - ist, daß - im Ausführungsbeispiel nach Figur 6 auf der rechten Seite - ein Nullpunktanschlag 26 gebildet wird, der durch eine Referenzlinie 27 definiert wird, welche ihrerseits durch eine genau bearbeitete mittige Passlinie durch die Passbohrung 22 der Lochrasterpalette 1 hindurchgeht. Auf diese Weise sind alle Maße des Werkstückes von dieser Referenzlinie 27 aus definiert, weil diese eine nullpunkt-orientierte Anschlagfläche darstellt.

Wichtig ist, daß an der gegenüberliegenden Aufspannpalettefläche 28 ein derartiger Anschlag fehlt.

Aus der Zeichnung ist ferner erkennbar, daß mit einem nicht näher dargestellten Fräser oder einem anderen Bearbeitungswerkzeug beispielsweise nun eine ringsumlaufende Nut 30 in Schwalbenschwanzform eingefräst werden kann. Ebenso werden im Bereich einer Ausnehmung 29 des plattenförmigen Werkstückes 17 entsprechende abgestufte Ausnehmungen eingebracht, wie z.B. eine Ausnehmung, die durch den Rand 31 definiert wird, eine weitere, abgestufte Ausnehmung, die durch den Rand 32 definiert wird und eine weitere Ausnehmung, die durch den Einstichrand 33 definiert wird.

Das dazugehörende Werkzeug ist ein sogenannter T-Nuten-Fräser.

Man erkennt im übrigen, daß das plattenförmige Werkstück 17 oberhalb eines Hohlraumes 24 auf der Lochrasterpalette 1 eingespannt ist.

Dieser Hohlraum wird für das Eintauchen der Bearbeitungswerkzeuge beim Bearbeiten des Werkstückes 17 benötigt.

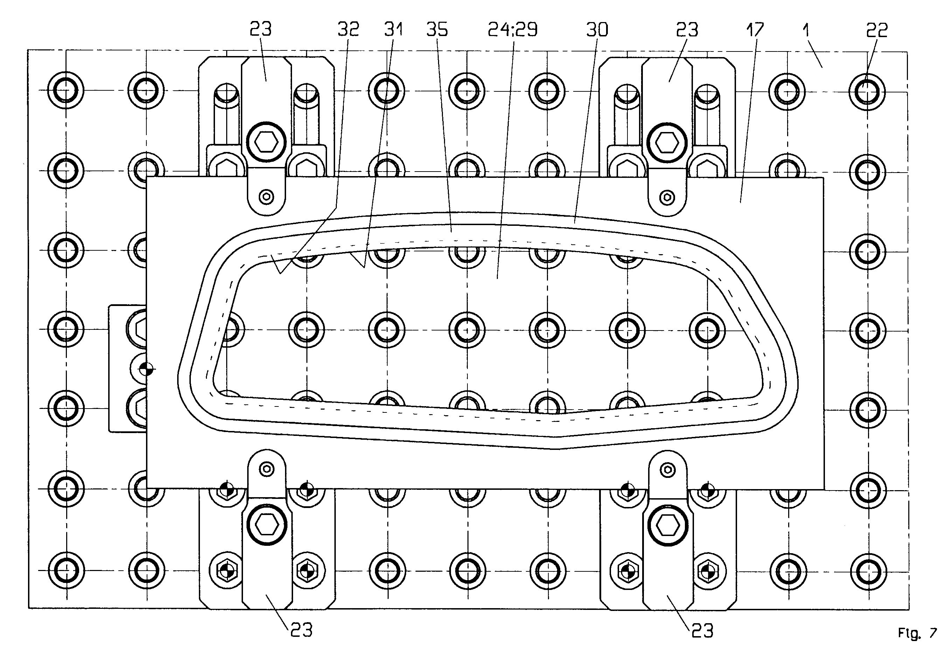

Die Figur 7 zeigt die Situation nach Figur 6 in Draufsicht, wo erkennbar ist, daß der Rahmen bereits schon aus dem plattenförmigen Werkstück 17 herausgearbeitet wurde und der Rahmen selbst unrund und geometrisch schwierig zu definieren ist. Die Innenkontur des Rahmens ist also nach Figur 7 bereits schon fertiggestellt.

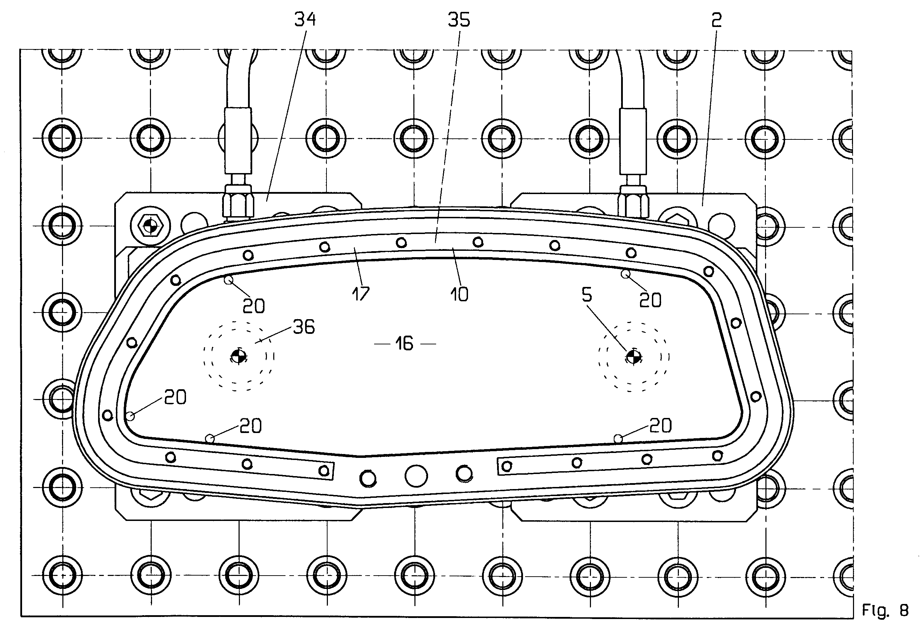

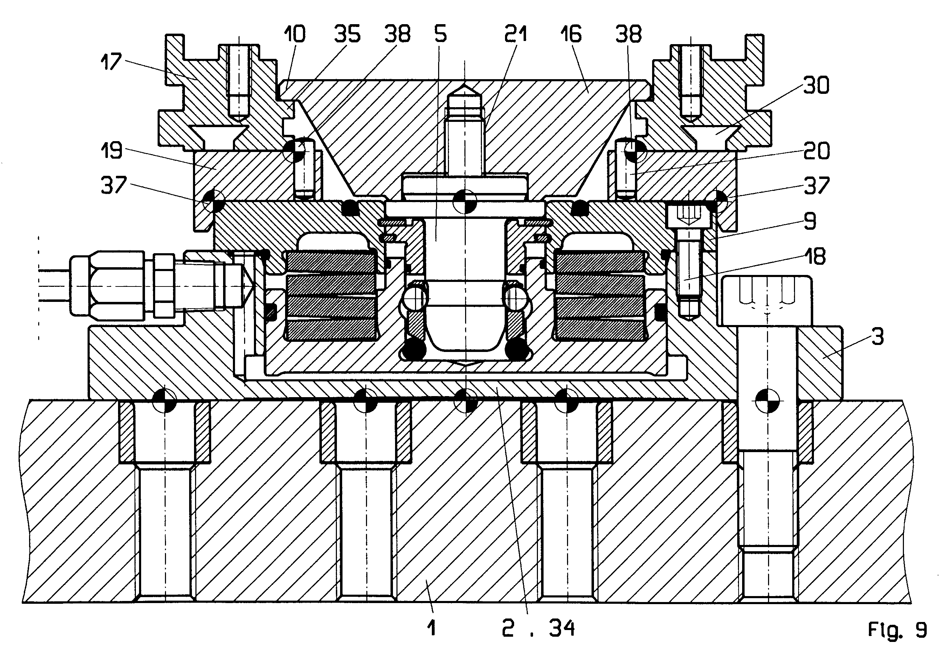

Wichtig ist nun, daß beim Übergang von Figur 7 auf die Figuren 8 und 9 das Werkstück 17 ausgespannt wird, um 180° gedreht wird und wieder eingelegt wird. Es werden aber jetzt nicht mehr die vorher erwähnten Flachspanner 23 verwendet, sondern es wird jetzt - erfindungsgemäss - ein einziges großflächiges Spannelement 16 verwendet, welches mit Hilfe von zwei Einzugsnippeln 5,36 und dazugehörenden Schnellspannzylindern 2,34 gegen die Oberseite des Werkstückes 17 gemäss Figur 9 gespannt wird.

Die Aufspannung erfolgt hierbei der Art, daß das Spannelement 16 nach außen weisende Vorsprünge 10 aufweist, welche sich an zugeordneten Aufspannpaletteflächen 35 des zu bearbeitenden Werkstückes 17 anlegen und dieses auf einer zugeordneten Aufspannplatte 19 festspannen.

Wichtig hierbei ist, daß die Aufspannplatte 19 selbst wiederum nullpunkt-orientiert auf dem zugeordneten Deckel 9 der Briede 3 mit Hilfe der Schrauben 18 beffestigt ist, so daß eine hochgenaue Aufspannung gewährleistet ist. Es werden also zwei im Abstand voneinander angeordnete Referenzanlageflächen 37 zwischen der Aufspannpalette 19 und dem Deckel 9 der Schnellspannzylinder-Anordnung mit den Schnellspannzylindern 5,36 verwendet.

In Figur 9 ist lediglich ein einziger Schnellspannzylinder 2 dargestellt.

In Figur 8 ist aber angedeutet, daß parallel und im Abstand zu dem ersten Schnellspannzylinder 2 mit seinem Einzugsnippel 5 ein zweiter Schnellspannzylinder 34 angeordnet ist, der mit seinem Einzugsnippel 36 in eine gleichartige Gewindebohrung 21 in dem Spannelement 16 eingreift, so wie dies anhand des Schnellspannzylinders 2 und dem Einzugsnippel 5 in Figur 9 dargestellt ist.

Die Figur 9 zeigt im übrigen, daß eine innenseitige Halterung des aufzuspannenden Werkstückes 17 mit Hilfe von Anschlägen 20 erfolgt, welche Anschläge in zugeordneten Passbohrungen in der Aufspannpalette 19 sitzen. Wichtig ist, daß der Anschlagstift 20 seitlich mit seiner nach aussen gerichteten Aussenseite wiederum eine Referenzanlagefläche 38 für die Anlage am Innenumfang des aufzuspannenden und haltenden Werkstückes 17 bildet.

Hierbei ist konstruktiv Vorsorge getroffen, daß die Referenzfläche 37, die wiederum zu der Nullpunkts-Referenzlinie der Lochrasterpalette 1 ausgerichtet ist, auf die Referenzanlagefläche 38 übertragen wird, so daß zwischen diesen beiden Referenzanlageflächen 37,38 keine unzulässige Maßtoleranz besteht.

Hier kommt es also nicht mehr darauf an, daß der Einzugsnippel 2,36 selbst nullpunkt-orientiert ist, und genau zu der Lochrasterpalette zentriert ist, weil die Zentrierungen ja durch die Anschlagstifte 20 gewährleistet werden. Die Aufspannaufgabe erfolgt also allein durch das Spannelement 16, welches damit das Werkstück 17 hält und ausrichtet. Die eigentliche eng tolerierte Ausrichtung des Werkstückes erfolgt aber im Bereich der vorher genannten Referenzanlageflächen 37 in Verbindung mit den Anschlagstiften 20.

Die Figur 8 zeigt demgemäss, daß nun durchaus zwei voneinander beabstandete Schnellspannzylinder 2,34 verwendet werden können, die mit zugeordneten Einzugsnippeln 5,36 das Spannelement 16 halten, weil ja die eigentliche Ausrichtung des Werkstückes 16 und die Lagenorientierung durch die Anschlagstifte 20 erfolgt.

Wichtig ist also, daß bei dieser Aufspannaufgabe die Aufspannpalette 19 in der vorher beschriebenen Weise über die Referenzanlagefläche 37 zu dem Deckel 9 des jeweiligen Schnellspannzylinders 2,34 nullpunkt-orientiert ist. Auf diese Weise wird vermieden, daß die Nullpunkt-Orientierung an dem Spannelement 16 (an dessen Aussenumfang) vorgenommen werden muß, was mit einer hochgenauen Bearbeitung des Spannelements 16 verbunden wäre. Dies wird nach der Erfindung dadurch vermieden, daß die lagenrichtige Zentrierung des zu bearbeitenden Werkstückes 17 durch Anschlagstifte 20 erfolgt, die in der vorher erwähnten Aufspannpalette 19 angebracht sind, welche ihrerseits nullpunkt-orientiert zu der Lochrasterpalette 1 ausgerichtet ist.

Das Spannelement 16 hat demgemäss keinerlei Berührung zu der hochgenau ausgerichteten Aufspannpalette 19. Die Ausrichtung des Werkstückes und die Aufspannung wird also funktionell voneinander getrennt, weil die Aufspannung durch das Spannelement 16 erfolgt und die Ausrichtung durch die hochgenau eingepasste Aufspannpalette 19 in Verbindung mit den Anschlagstiften 20.

Die vorliegende Erfindung stellt erstmals die Möglichkeit bereit, Werkstücke auf einfache, unkomplizierte und kostengünstige Weise hochgenau und nullpunkt-orientiert sowie auf Wunsch in vorgegebener Winkellage einzuspannen.

### ZEICHNUNGSLEGENDE

- 1.: Lochrasterpalette
- 2.: Schnellspannzylinder
- 3.: Bride
- 4.: Ansatz
- 5.: Einzugsnippel
- 6.: Aufspannpalette
- 7.: Spannelement
- 8.: Werkstück
- 9.: Deckel
- 10.: Vorsprung
- 11.: Aussparung
- 12.: Öffnung
- 13.: Anschlag
- 14.: Aussparung
- 15.: Stift
- 16.: Spannelement
- 17.: Werkstück (Fensterrahmen)
- 18.: Schraube
- 19.: Aufspannpalette
- 20.: Anschlagstift
- 21.: Gewindebohrung
- 22.: Paßbohrung
- 23.: Flachspanner
- 24.: Hohlraum
- 25.: Spannpratze
- 26.: Nullpunktanschlag
- 27.: Referenzlinie
- 28.: Auflagefläche
- 29: Ausnehmung
- 30: Nut'
- 31: Rand
- 32: Rand
- 33: Einstichrand
- 34: Schnellspannzylinder
- 35: Auflagefläche
- 36: Einzugsnippel
- 37: Referenzanlagefläche
- 38: Referenzanlagefläche

## Patentansprüche

1. Vorrichtung zur Befestigung eines Werkstückes mittels eines Einzugsnippels und eines Schnellspannzylinders, **dadurch gekennzeichnet**, daß die Einzugskraft des Schnellspannzylinders (2,34) über mindestens einen Einzugsnippel (5,36) auf das Werkstück (8,17) wirkt.

2. Vorrichtung nach Anspruch 1, **dadurch gekennzeichnet**, daß zwischen dem Werkstück (8,17) und dem Schnellspannzylinder (2,34) eine Aufspannpalette (6,19) angeordnet ist.

3. Vorrichtung nach Anspruch 1 oder 2, **dadurch gekennzeichnet,** daß das Werkstück (8,17) verdrehsicher gegenüber dem Schnellspannzylinder (2,34) gehalten ist.

4. Vorrichtung nach einem der vorhergehenden Ansprüche, **dadurch gekennzeichnet**, daß der Schnellspannzylinder (2,34) mit einem am Außenumfang unrund ausgebildeten Deckel (9) versehen ist.

5. Vorrichtung nach einem der vorhergehenden Ansprüche, **dadurch gekennzeichnet**, daß das an dem Einzugsnippel (5,36) befestigte Spannelement (7,16) über eine geeignete Einrichtung (15) gegenüber der Aufspannpalette (6,19) bzw. dem Schnellspannzylinder (2) in einer bestimmten Winkelstellung gehalten ist.

6. Vorrichtung nach einem der vorhergehenden Ansprüche, **dadurch gekennzeichnet**, daß das dem Einzugsnippel (5,36) zugeordnete Spannelement (7,16) mit einer oder mehreren Aussparungen (14) versehen ist.
